# EUROPEAN PATENT SPECIFICATION

(11) **EP 3 769 613 B1**
(45) Date of publication and mention of the grant of the patent: **27.08.2025**
(21) Application number: 20187050.8
(22) Date of filing: 21.07.2020
(51) Int. Cl.: A01K 85/01, A01K 97/02

(54) **FISHING LURE**
ANGELKÖDER
LEURRE DE PÊCHE

(30) Priority: 25.07.2019 GB 201910634
(43) Date of publication of application: 27.01.2021
(73) Proprietor: Bech, Philip, Liverpool, Merseyside L21 9LL (GB)
(72) Inventor: Bech, Philip, Liverpool, Merseyside L21 9LL (GB)
(74) Representative: WP Thompson

(56) References cited:
- CN-U- 2 068 750
- FR-A3- 2 773 435
- TW-B- 526 042
- US-A- 5 560 140
- US-A1- 2004 020 102
- US-B1- 6 675 525

## Description

This invention relates to fishing lures which allow controlled release of a liquid fish attractant.

Fishing has become more sophisticated over the years, as anglers have developed their tactics and skills. Fishing lures are made out of a vast range of different materials and substances, and are generally designed with the aim of assisting the angler in catching more fish.

TW 526 042 B discloses a fishing method and apparatus which forms a float with a soft material having a hole through one side thereof and an awl hollow in the top of the other side. Inside the hole of the float is fixed an eatable capsule in which solid lure mixed by powdery tartaric acid, bubble booster and delicious bait is filled. The solid lure wrapped by upper and lower sleeve of eatable capsule. When the solid lure on the float is thrown into a fishpond, it is intended that the tartaric acid and bubble booster get contact with the water coming in through the hole in the top of the lower sleeve, inducing bubbles escaping out of the hole and spread them to a distant place as well as bring out the smell to attract fish. The lure is intended to become wrinkled after long-time soaking, looking just like living worms, fish will eat it up fast. This is intended to achieve fast fishing.

US 6,675,525 B1 discloses a disposable, buoyant, scented fishing lure that is formed of a soft, resilient, economically disposable plastic material, with a hollow chamber formed within the lure body. A fish attractant scent material and flotation element are placed within the lure body chamber. The float may be coated or otherwise treated with the scent material prior to installation within the lure, to install the scent material therein. The chamber, with the scent material and float installed therein, is then hermetically sealed to prevent escape of the scent therefrom. When the lure is to be used, the angler installs a fish hook therein and penetrates the scent and float chamber with the hook. This is intended to allow the scent material to be released gradually from the lure through the passages formed by the hook insertion in the lure. Once the scent material has substantially dissipated, the angler may discard the used lure for a fresh one.

US 2004/020102 A1 discloses a floating fishing lure that is intended to have the capability to adjust the buoyancy of the fish lure with a high degree of precision, such that the fish lure has fore and aft chamber sections connected and held together by an attaching means. Disposed on each fore and aft chamber sections are a plurality of buoyancy windows, one set of which will coincidentally overlie the other set of buoyancy windows as the fore chamber section is rotationally moved in regard to the aft chamber section. By changing the rotational placement of the two sections, valve aperture openings are produced that are intended to regulate the air to water ratio within the fish lure, thereby controlling its buoyancy.

US 5,560,140 discloses a device for catching fish that is intended to be used as a plug, lure or as a spinner. The device has a bait containment cavity and a lid held in place by spring tension, extra hooks which may be slidably pulled up a wire, out of storage, down a slot and twisted into a quick release coil, which positions it for catching a fish. The device also has a bouyant spinner which gives different actions to the lure while trolling through water. A removable eyelet is provided allowing easy cleaning and experimentation with different size spinners.

FR 2 773 435 A3 discloses a device comprising a hollow tubular part, which is open at its two ends. The device is formed from a tubular part with a constant straight section extended by a neck of narrower straight section. A solid part having a density less than the tubular part has an axial drilling passing through and able to completely penetrate the tubular part. A central rod, which can be hollow, is introduced through each end of the tubular part and can pass though the solid part in a sealed manner.

CN 2 068 750 U discloses a fish luring device which mainly uses odorous liquid bait. The device comprises a device body and a container. The container is inserted and arranged in the device body to form a cavity. The interior of the device body is filled with adsorbing materials, and a cover is arranged on the container. The liquid bait is contained in the container and is adsorbed by the adsorbing materials via holes in the container. The bait volatilises in water through holes on the device body.

A tactic that is commonly used by anglers is to release attractive substances into the water around the angler's hook in order to attract a greater number of fish. When feeding, fish rely heavily on the sense of scent and therefore, scented liquids are often used to attract fish towards a hook.

Accordingly, there are several different methods that anglers may use to release liquids into the desired area while fishing, which include: soaking a lure in the liquid attractant prior to casting into a chosen body of water; using water-soluble polyvinyl alcohol (PVA) bags or water soluble capsules filled with liquid attractant which dissolve to release the liquid attractant upon entry to the water; or simply adding a suitable amount of attractant onto the lure.

However, a disadvantage of all of these methods is that the liquid attractant is dispersed rapidly, once the lure has entered the water. Therefore, it would be beneficial to provide a lure that can release liquid attractant at a controlled rate, in order to sustain the attraction of fish over an increased period of time, thus improving the likelihood that an angler will make a successful catch.

Additionally, in the known methods of using water-soluble PVA bags and/or water soluble capsules, only certain liquids may be suitable for use as a fish attractant, since certain types
of liquid may cause the bag or capsule to dissolve during preparation, thus limiting the selection of liquid for the angler. Liquid attractants are often used during carp fishing, as this method of attraction is particularly suitable for attracting carp. 'Zig' fishing is a known technique used by anglers to catch carp, and this technique involves careful placement of a lure at a desired depth in a chosen body of water, in contrast to simply positioning the lure at the bottom of the body of water. Carp are commonly found at shorter depths, so the 'zig' fishing technique may be advantageous to anglers.

A 'zig rig' comprises a mainline, a weight, a hook line of a desired length, and a buoyant lure in combination with a hook. When the mainline is cast, the weight sinks to the bottom of the body of water. The hook line and the hook then rise due to the buoyancy of the lure which is attached to the hook. It is therefore essential that the lure is sufficiently buoyant to allow the hook to be sustained at a desired depth within the water.

Lures for zig fishing typically comprise small pieces of coloured foam which are attached to a hook directly or attached to a small rubber ring that is also attached to the hook, known as an aligner. In practice, the small rubber aligner ring attached to the hook and foam is used to speed up the preparation of the zig rig and to ensure that the hook is centralised on the foam to improve the likelihood of a successful 'bite'.

It is often desired to use a liquid attractant in combination with the small pieces of foam to improve the ability to attract fish, such as carp. Using existing methods, the foam piece is generally soaked in the liquid attractant so that the liquid is absorbed, or the user may coat the surface of the foam with the liquid prior to use.

Anglers may instead choose to use a water-soluble PVA bag or capsule to disperse liquid into the desired area. However, in this case, it would also be necessary for the angler to select a separate suitable buoyancy aid so that the arrangement is appropriate for use in zig fishing.

It would therefore be an advantage to provide a lure which is both buoyant and able to disperse a liquid which is highly attractive to fish at a controlled rate in order to maximise the likelihood of the angler making a successful catch. In accordance with the present invention, a fishing lure according to claim 1 comprises:
a capsule comprising an enclosing wall defining an internal volume;
means for introducing liquid into the internal volume;
at least one aperture in the enclosing wall configured to control a rate of release of liquid fish attractant from the internal volume; and
a buoyancy aid configured to be attached or to the capsule; and
wherein the fishing lure further comprises an alignment aid, the capsule is operatively connected to the alignment aid, and the alignment aid comprises an annular band, configured to connect to the outer surface of the capsule, and a hollow tail part, suitable for receiving a hook and a hook line.

The fishing lure of the present invention provides a means for an angler to release liquid into an area at a controlled rate to ensure that there is a sustained period during which fish may be successfully attracted towards the lure, thus improving the likelihood that an angler will make a successful catch.

The fishing lure is provided with a capsule into which an angler may introduce a chosen liquid into its internal volume. The fishing lure is provided with one or more apertures in the enclosing wall of the capsule for controlled release of the chosen liquid upon being cast into a body of water. The fishing lure is also provided with a buoyancy aid which is attached or attachable to the capsule such that the fishing lure may be positioned at a desired depth in a body of water, so that it can be used effectively in zig fishing.

Preferably, the means for introducing liquid into the internal volume of the capsule comprises a releasably closable opening.

Preferably, the buoyancy aid comprises closure means configured to securely close the releasably closable opening of the capsule.

Preferably, the buoyancy aid comprises a bung, the bung further comprising a lower part configured to be inserted into the releasably closable opening to securely close the capsule. Alternatively, the buoyancy aid comprises a cap, wherein the cap is configured to be slidably disposed over the releasably closable opening to securely close the capsule.

Alternatively, the buoyancy aid comprises a screw cap, wherein the screw cap is configured to securely close the capsule.

Preferably, the screw cap comprises a male part of a screw thread, configured to securely engage with a corresponding female part of a screw thread located on the interior of the enclosing wall of the capsule, proximate the releasably closable opening; or
the screw cap comprises a female part of a screw thread, configured to securely engage with a corresponding male part of a screw thread located on the exterior of the enclosing wall of the capsule, proximate the releasably closable opening.

Alternatively, the fishing lure comprises non-buoyant closure means configured to securely close the releasably closable opening of the capsule.

Preferably, the buoyancy aid is separate to the non-buoyant closure means and is operatively connected to the capsule.

Alternatively, the buoyancy aid comprises a hollow tail section, suitable for receiving a hook and a hook line.

Optionally, the fishing lure further comprises a light element, or a vibrating element.

Optionally, the fishing lure is shaped to resemble a fish or an insect, or the closing means is shaped to resemble a fish or an insect.

Further optionally, the buoyancy aid is brightly coloured or fluorescent.

By way of example only, specific embodiments of the present invention will now be described with reference to the accompanying drawings, in which:
Figure 1A is a vertical cross-sectional view of a first embodiment of fishing lure in accordance with the present invention;
Figure 1B is a vertical cross-sectional view of the fishing lure of figure 1A, shown attached to a hook;
Figure 2A is a vertical cross-sectional view of a second embodiment of fishing lure in accordance with an example;
Figure 2B is a vertical cross-sectional view of a third embodiment of fishing lure in accordance with an example, shown in combination with a hook;
Figure 3A is a vertical cross-sectional view of a fourth embodiment of fishing lure in accordance with the present invention, attached to a hook; and
Figure 3B is a vertical cross-sectional view of a fifth embodiment of fishing lure in accordance with the present invention, attached to a hook.

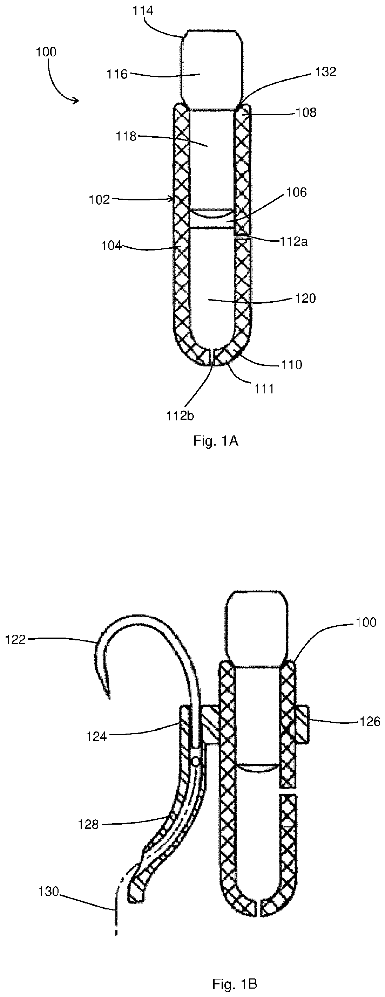

Referring firstly to Figure 1A, a fishing lure 100 comprises a capsule 102 formed from a plastic type material such as polypropylene. The capsule 102 has an elongate tubular enclosing wall 104 which defines an internal volume 106. The capsule 102 comprises an open upper end 108 which defines an opening 132 and an opposite, lower end 110 is closed by a hemispherical end portion 111 which is contiguous with the tubular enclosing wall 104.

The capsule 102 is releasably sealed at the upper open end 108 by a resiliently deformable bung 114 which comprises an upper section 116 and a lower section 118. The bung is made of a foam material such as PVA sponge with a density lower than the density of water, in order to provide buoyancy to the fishing lure.

The lower section 118 of the bung extends into the upper part of the internal volume 106 of the capsule, and is shaped to provide a secure, water-tight fit with the interior surface of the enclosing wall 104 such that the first end 108 of the capsule is releasably closed. The upper section 116 of the bung 114 has a diameter which is wider than that of the opening 132, and extends away from the capsule to act as a buoyancy aid for the fishing lure 100.

The enclosing wall 104 of the capsule 102 further comprises two apertures 112a and 112b passing through the enclosing wall. The first aperture 112a is positioned approximately midway between the open upper end 108 and the lower end 110 of the enclosing wall 104. The second aperture 112b is provided at the apex of the hemispherical end portion 111 at the lower end 110. The apertures 112a and 112b are of a constant diameter of approximately 0.7mm.

In use, the bung 114 is removed from the capsule 102 to allow access to the opening 132 so that a liquid fish attractant 120 may be introduced into the internal volume 106 of the capsule 102. The bung 114 is then replaced to ensure that the capsule 102 is securely sealed and water-tight other than for the apertures 112a, 112b. The fishing lure 100 may then be attached to a hook and cast as part of a zig rig, wherein the lure 100 is suspended at a desired depth in the water.

Referring now to Figure 1B, the fishing lure 100 is attached to a hook 122 by means of an alignment aid 124 which is connected to the outer surface of the enclosing wall 104 of the capsule 102 and comprises a resiliently deformable annular band 126 and a hollow elongate tubular tail part 128 which extends downwardly from the band 126 and curves away from it.

In use, the lure 100 is inserted into the band of the alignment aid 124 such that the band fits securely around the outside of the enclosing wall 104 of the capsule 102. A hook 122 is connected to a hook line 130 and threaded through the tail part 128 such that the arrangement resembles that of Figure 1B.

As an alternative that does not form part of the invention, it is envisaged that the bung 114 itself may comprise a tail part that extends from the upper section 116 of the bung. In this alternative arrangement, the tail part is configured to engage and retain a hook, in a similar manner to the tail part 128 in the first embodiment. In this arrangement, the lure would not require an annular band 126 to enable the capsule to be connected to a hook.

When the lure 100 and hook 122 are cast into a body of water, the apertures 112a and 112b in the enclosing wall 104 of the capsule 102 result in controlled release of the liquid fish attractant 120 from the internal volume 106 into the water.

It is envisaged that there may be more than two apertures in the enclosing wall of the capsule depending on the user's requirements. Additionally, the size of the apertures may be chosen to allow the user to control the rate of release of the attractant into the water, depending on their specific requirements.

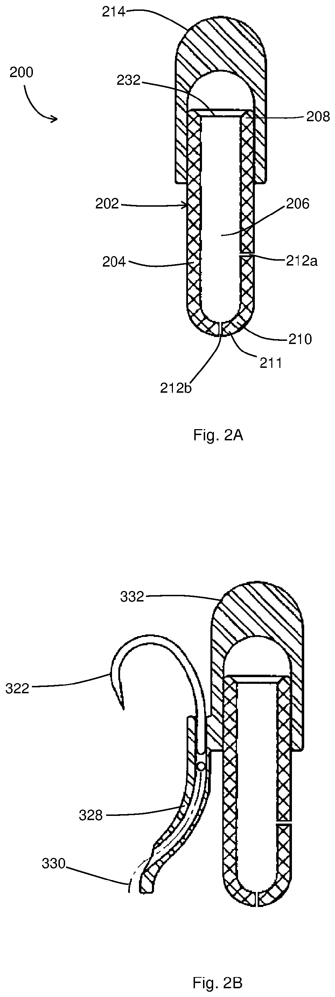

Referring now to Figure 2A, a second embodiment of fishing lure 200 comprises a capsule 202 which is very similar to the capsule 102 of the first embodiment, formed from a plastic material such as polypropylene and having an enclosing wall 204 defining an internal volume capsule 202 also comprises a first end 208 which defines an opening 232 and an opposite, lower end 210 which is closed by a hemispherical end portion 211 which is contiguous with the tubular enclosing wall 204. The enclosing wall 204 of the capsule comprises two apertures 212a and 212b, with a first aperture 212a positioned approximately two-thirds of the way down between the upper open end 208 and the lower end 210 of the enclosing wall 204, and a second aperture 212b at the lower end 210 of the enclosing wall 204. The apertures 212a, 212b are of a constant diameter of approximately 0.7mm.

The open upper end 208 of the capsule is releasably sealed by use of a buoyant cap 214, formed from a resiliently deformable foam material such as PVA sponge with a density lower than the density of water. The cap 214 is slidably disposable over the open first end 208 of the capsule 202, and is dimensioned to ensure a secure fit.

In use, the cap 214 is removed from the capsule 202 to allow access to opening 232 so that a liquid fish attractant may be introduced into the internal volume 206 of the capsule 202. The cap 214 is then fitted over the first end 208 of the capsule 202 to ensure that the capsule 202 is securely sealed and water-tight, other than for apertures 212a, 212b. The fishing lure 200 may then be attached to a hook and cast as part of a zig rig, wherein the lure 200 is suspended at a desired depth in the water.

The fishing lure 200 is then attached to a hook by means of an alignment aid comprising a resiliently deformable annular band into which the capsule 202 is inserted such that the band fits securely around the outside of the enclosing wall 204. The alignment aid further comprises a hollow tail part which extends downwardly from the band and curves away from it, and through which the hook and a hookline are threaded.

Alternatively, as seen in the third embodiment in Figure 2B which does not form part of the present invention, a cap 332 is provided which is identical to cap 214 but further comprises a hollow tail part 328 which extends generally perpendicularly to the cap 332. A hook 322 and a hookline 330 may be threaded through the tail part 328. In this embodiment, the lure does not require an annular band to enable the capsule to be connected to a hook.

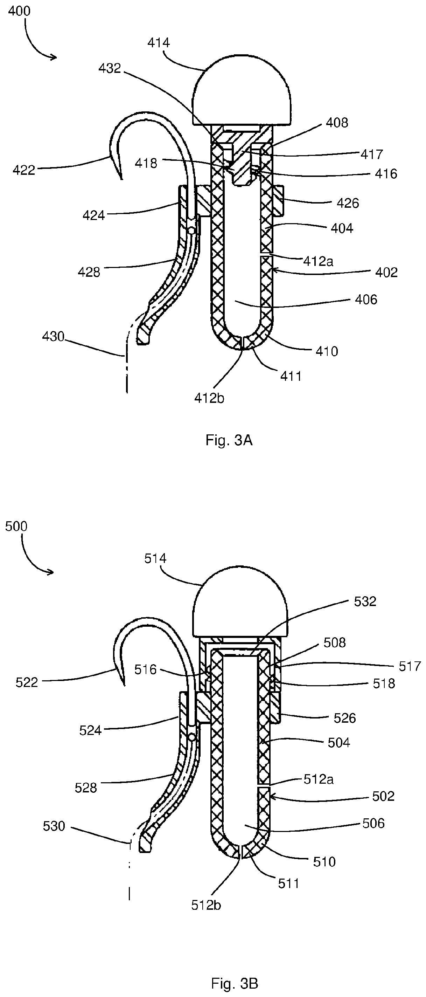

Referring now to Figures 3A and 3B, which illustrate fourth and fifth embodiments of a fishing lure, each comprises a capsule 402, 502 respectively which is very similar to the capsule 202 of Figure 2A and the features of the capsule are identified with the same reference numerals increased by 200 (Figure 3A) and 300 (Figure 3B) respectively.

The only difference from the capsule 202 is at the upper end, relating to the means for releasably closing the openings 432, 532.

In the fourth embodiment of fishing lure 400 shown in Figure 3A, the inner surface of the enclosing wall 404 at the first end 408 of the capsule comprises female screw threads 416. The fishing lure 400 also comprises a generally hemispherical screw cap 414 having a downwardly depending shank 417 which has external male screw threads 418 which are screw-threadedly received in the female thread 416 at the upper end 408 of the capsule 402.

The cap 414 is made from a foam-type material such as PVA sponge with a density less than water to ensure that the fishing lure 400 remains buoyant.

The screw cap 414 can be unscrewed from the capsule 402 to allow access to opening 432 so that a liquid fish attractant may be introduced into the internal volume 406 of the capsule 402. The screw cap 412 is then screwed into place to seal the opening 432 of the capsule 402 and ensure that it is water tight, other than for the apertures 412a, 412b.

In the fifth embodiment of fishing lure 500 shown in Figure 3B, the outer surface of the enclosing wall 504 at the first end 508 of the capsule is provided with male screw threads 518.

The fishing lure 500 also comprises a generally hemispherical screw cap 514 dimensioned to fit tightly over the first end 508 capsule 502. A cylindrical sleeve 517 extends from the undersurface of the cap 514 and is provided with female screw threads 516 on its inner surface which are screw-threadedly engagable with the external screw threads 518 at the upper end 508 of the capsule. The cap 514 is made from a foam material such as PVA sponge with a density less than water to ensure that the fishing lure 400 remains buoyant. The screw cap 514 may be removed from the capsule 502 so that liquid can be introduced into the internal volume 506 of the capsule 502, and the screw cap 514 is be replaced to ensure that the capsule 502 is water-tight, other than for the apertures 512a, 512b.

The fourth and fifth embodiments of a fishing lure shown in Figures 3A and 3B are both attached to an alignment aid 424, 524, which comprises a resiliently deformable annular band 426, 526 and a hollow tail part 428, 528 which extends downwardly from the band 426, 526 and curves away from it. The capsule 402, 502 is held securely by the band 456, 526, which is connected to the enclosing wall 404, 504. A hook 422, 522 and hookline 430, 530 may be threaded through the tail part 428, 528.

The invention is not restricted to the details of the foregoing embodiments. For example, it is also envisaged that a fishing lure may comprise a capsule with an enclosing wall defining an internal volume and comprising a first open end defining an opening and a second closed end, as well as one or more apertures in the enclosing wall. The opening may be releasably sealed by a slidably disposable cap, a bung or a screw cap, and buoyancy may be provided by a separate buoyancy aid which is attachable to the capsule by one of a rubber band, a thread or alternative attachment means.

It is envisaged that a fishing lure may also be provided which comprises a capsule having first closed and second closed ends. The enclosing wall may be provided with one or more apertures, and a liquid fish attractant may be introduced by being injected through an aperture. Buoyancy may be provided by a buoyancy aid which is operatively attachable to the capsule by one of a rubber band, a thread or alternative attachment means.

In relation to the buoyancy aid provided in all embodiments, it is envisaged that this is formed of a foam type material. However, any material may be used provided that it is less dense than water to provide buoyancy to the lure.

It is also envisaged that any other means for releasably closing an opening in the capsule in order to introduce a liquid into the internal volume of the capsule may be used such as a hinged lid, plug, cap or alternative closing means.

It is also envisaged that a bung, cap, screw cap or other closing means may be of any size or shape provided that the capsule in the fishing lure may be closed securely to be water-tight.

It is envisaged that the capsule is operatively connected to an alignment aid, comprising an annular band and a hollow tail part. Alternatively, outside of the scope of the present invention, and in a similar way to the third embodiment of a fishing lure seen in Figure 2B, it is envisaged that a closing means (such as a bung, screw cap, lid, plug or alternatives) may be provided which further comprises a hollow tail part through which a hook and a hookline may be threaded. In this case, an annular band would not be required.

In relation to the apertures in the enclosing wall of the capsule, it is envisaged that the fishing lure may comprise any number of apertures to provide the desired controlled rate of release of liquid from the internal volume. For example, the lure may be provided with five apertures positioned around the enclosing wall of the capsule which will result in a faster rate of release of the liquid fish attractant into the chosen body of water.

Similarly, the apertures may be positioned anywhere in the enclosing wall of the capsule, in any configuration to provide the angler's desired controlled rate of release of liquid.

The apertures may also be of any size or shape, provided that liquid may be released from the internal volume of the capsule once the fishing lure has entered a body of water.

It is also envisaged that the capsule is formed of a plastic type material, however any alternative material may be suitable for use. The plastic type material may also be biodegradable to take into account environmental considerations.

In the embodiments described, it is envisaged that the capsule has curved ends. However, it is also envisaged that the capsule may comprise flat or pointed ends. Similarly, while the described embodiments show that the enclosing wall of the capsule is generally cylindrical in shape, the enclosing wall may be of another suitable shape, provided it may define an internal volume in which liquid may be retained.

It is envisaged that the fishing lure and/or the closure means may be shaped like a small fish, bug or any other type of wildlife in order to appear more attractive to fish, and to increase the angler's likelihood of getting a catch. It is also envisaged that the fishing lure may comprise a vibrating component to more closely imitate the movement of wildlife in the body of water. The vibrating component may be housed in the internal volume of the capsule or within the closing means. A vibrating component may cause ripples within the body of water which could increase the attraction from fish towards the lure. This may lead to a higher likelihood of getting a catch for the angler.

Similarly, the fishing lure may also comprise a light. This may, for example, be an LED or an isotope light. The light may be housed in the internal volume of the capsule or within the closing means. By providing a light in the water, the lure may become more attractive to both fish themselves, as well as wildlife such as bugs which, in turn, may attract fish. This may also increase the angler's likelihood of getting a catch.

## Claims

1. A fishing lure (100) comprising:
a capsule (102, 402, 502) comprising an enclosing wall (104, 404, 504) defining an internal volume (106, 406, 506);
means for introducing liquid into the internal volume;
at least one aperture in the enclosing wall configured to control a rate of release of liquid fish attractant from the internal volume;
a buoyancy aid (114, 414, 514)
configured to be attached to the capsule; and
said fishing lure being **characterized in that** it further comprises an alignment aid (124, 424, 524), the capsule is operatively connected to the alignment aid (124, 424, 524), and the alignment aid comprises an annular band (126, 426, 526), configured to connect to the outer surface of the capsule, and a hollow tail part (128, 428, 528), suitable for receiving a hook (122, 422, 522) and a hook line (130, 430, 530).

2. A fishing lure as claimed in claim 1, wherein the means for introducing liquid into the internal volume of the capsule comprises a releasably closable opening.

3. A fishing lure as claimed in claim 2, wherein the buoyancy aid comprises closure means configured to securely close the releasably closable opening of the capsule.

4. A fishing lure as claimed in claim 3, wherein the buoyancy aid comprises a bung (114), the bung further comprising a lower part (118) configured to be inserted into the releasably closable opening to securely close the capsule.

5. A fishing lure as claimed in claim 3, wherein the buoyancy aid comprises a cap (214), wherein the cap is configured to be slidably disposed over the releasably closable opening (208) to securely close the capsule.

6. A fishing lure as claimed in claim 3, wherein the buoyancy aid comprises a screw cap (414), wherein the screw cap is configured to securely close the capsule.

7. A fishing lure as claimed in claim 6, wherein the screw cap comprises a male part of a screw thread (418), configured to securely engage with a corresponding female part of a screw thread (416) located on the interior of the enclosing wall of the capsule, proximate the releasably closable opening.

8. A fishing lure as claimed in claim 6, wherein the screw cap comprises a female part of a screw thread, configured to securely engage with a corresponding male part of a screw thread located on the exterior of the enclosing wall of the capsule, proximate the releasably closable opening.

9. A fishing lure as claimed in claim 2, comprising non-buoyant closure means configured to securely close the releasably closable opening of the capsule.

10. A fishing lure as claimed in claim 9, wherein the buoyancy aid is separate to the closure means and is operatively connected to the capsule.

11. A fishing lure as claimed in any of claims 1 to 8, wherein the buoyancy aid comprises a hollow tail section, suitable for receiving a hook and a hook line.

12. A fishing lure as claimed in any of the preceding claims:
i) further comprising a light element; and/or
ii) further comprising a vibrating element.

13. A fishing lure as claimed in any of the preceding claims, wherein:
i) the lure is shaped to resemble a fish or an insect; and/or
ii) the closure means is shaped to resemble a fish or an insect; and/or
iii) the buoyancy aid is brightly coloured or fluorescent.

## Patentansprüche

1. Angelköder (100), umfassend:
eine Kapsel (102, 402, 502), die eine umschließende Wand (104, 404, 504) umfasst, die ein Innenvolumen (106, 406, 506) definiert;
Mittel zum Einbringen von Flüssigkeit in das Innenvolumen;
mindestens eine Öffnung in der umschließenden Wand, die konfiguriert ist, um eine Freisetzungsrate eines flüssigen Fischlockstoffs aus dem Innenvolumen zu steuern;
eine Auftriebshilfe (114, 414, 514), die konfiguriert ist, um an der Kapsel befestigt zu werden; und
der Angelköder **dadurch gekennzeichnet ist, dass** er ferner eine Ausrichtungshilfe (124, 424, 524) umfasst, wobei die Kapsel betriebsfähig mit der Ausrichtungshilfe (124, 424, 524) verbunden ist und die Ausrichtungshilfe ein ringförmiges Band (126, 426, 526), das konfiguriert ist, um mit der äußeren Oberfläche der Kapsel verbunden zu werden, und ein hohles Schwanzteil (128, 428, 528) umfasst, das geeignet zum Aufnehmen eines Haken (122, 422, 522) und einer Hakenschnur (130, 430, 530) ist.

2. Angelköder nach Anspruch 1, wobei das Mittel zum Einbringen von Flüssigkeit in das Innenvolumen der Kapsel eine lösbar verschließbare Öffnung umfasst.

3. Angelköder nach Anspruch 2, wobei die Auftriebshilfe ein Verschlussmittel umfasst, das konfiguriert ist, um die lösbar verschließbare Öffnung der Kapsel sicher zu verschließen.

4. Angelköder nach Anspruch 3, wobei die Auftriebshilfe einen Stopfen (114) umfasst, wobei der Stopfen ferner ein Unterteil (118) umfasst, das konfiguriert ist, um in die lösbar verschließbare Öffnung eingeführt zu werden, um die Kapsel sicher zu verschließen.

5. Angelköder nach Anspruch 3, wobei die Auftriebshilfe eine Kappe (214) umfasst, wobei die Kappe konfiguriert ist, um verschiebbar über der lösbar verschließbaren Öffnung (208) angeordnet zu werden, um die Kapsel sicher zu verschließen.

6. Angelköder nach Anspruch 3, wobei die Auftriebshilfe eine Schraubkappe (414) umfasst, wobei die Schraubkappe konfiguriert ist, um die Kapsel sicher zu verschließen.

7. Angelköder nach Anspruch 6, wobei die Schraubkappe einen männlichen Teil eines Schraubgewindes (418) umfasst, der konfiguriert ist, um sicher mit einem entsprechenden weiblichen Teil eines Schraubgewindes (416) in Eingriff zu kommen, das sich an der Innenseite der umschließenden Wand der Kapsel in der Nähe der lösbar verschließbaren Öffnung befindet.

8. Angelköder nach Anspruch 6, wobei die Schraubkappe einen weiblichen Teil eines Schraubgewindes umfasst, der konfiguriert ist, um sicher mit einem entsprechenden männlichen Teil eines Schraubgewindes in Eingriff zu kommen, das sich an der Außenseite der umschließenden Wand der Kapsel in der Nähe der lösbar verschließbaren Öffnung befindet.

9. Angelköder nach Anspruch 2, umfassend ein nicht-schwimmfähiges Verschlussmittel, das konfiguriert ist, um die lösbar verschließbare Öffnung der Kapsel sicher zu verschließen.

10. Angelköder nach Anspruch 9, wobei die Auftriebshilfe von dem Verschlussmittel getrennt ist und betriebsfähig mit der Kapsel verbunden ist.

11. Angelköder nach einem der Ansprüche 1 bis 8, wobei die Auftriebshilfe einen hohlen Schwanzabschnitt umfasst, der zum Aufnehmen eines Hakens und einer Hakenschnur geeignet ist.

12. Angelköder nach einem der vorstehenden Ansprüche:
i) ferner umfassend ein Leuchtelement; und/oder
ii) ferner umfassend ein Vibrationselement.

13. Angelköder nach einem der vorstehenden Ansprüche, wobei:
i) der Köder so geformt ist, dass er einem Fisch oder einem Insekt ähnelt; und/oder
ii) das Verschlussmittel so geformt ist, dass es einem Fisch oder einem Insekt ähnelt; und/oder
iii) die Auftriebshilfe leuchtend gefärbt oder fluoreszierend ist.

## Revendications

1. Leurre de pêche (100) comprenant :
une capsule (102, 402, 502) comprenant une paroi d'enceinte (104, 404, 504) délimitant un volume interne (106, 406, 506) ;
un moyen d'introduction de liquide dans le volume interne ;
au moins une ouverture dans la paroi d'enceinte conçue pour commander une vitesse de libération d'appât liquide pour poissons depuis le volume interne ;
un dispositif d'aide à la flottabilité (114, 414, 514) conçue pour être attachée à la capsule ; et
ledit leurre de pêche étant **caractérisé en ce qu'**il comprend en outre un dispositif d'aide à l'alignement (124, 424, 524), la capsule est fonctionnellement reliée au dispositif d'aide à l'alignement (124, 424, 524), et le dispositif d'aide à l'alignement comprend une bande annulaire (126, 426, 526), conçue pour être raccordée à la surface externe de la capsule, et une partie queue creuse (128, 428, 528), appropriée pour recevoir un hameçon (122, 422, 522) et une ligne d'hameçon (130, 430, 530).

2. Leurre de pêche selon la revendication 1, dans lequel le moyen d'introduction de liquide dans le volume interne de la capsule comprend une ouverture pouvant être fermée de manière libérable.

3. Leurre de pêche selon la revendication 2, dans lequel le dispositif d'aide à la flottabilité comprend un moyen de fermeture conçu pour fermer étroitement l'ouverture pouvant être fermée de manière libérable de la capsule.

4. Leurre de pêche selon la revendication 3, dans lequel le dispositif d'aide à la flottabilité comprend un bouchon (114), le bouchon comprenant en outre une partie inférieure (118) conçue pour être insérée dans l'ouverture pouvant être fermée de manière libérable pour fermer étroitement la capsule.

5. Leurre de pêche selon la revendication 3, dans lequel le dispositif d'aide à la flottabilité comprend un couvercle (214), le couvercle étant conçu pour être disposé de manière coulissante sur l'ouverture pouvant être fermée de manière libérable (208) pour fermer étroitement la capsule.

6. Leurre de pêche selon la revendication 3, dans lequel le dispositif d'aide à la flottabilité comprend un couvercle vissé (414), le couvercle étant conçu pour fermer étroitement la capsule.

7. Leurre de pêche selon la revendication 6, dans lequel le couvercle vissé comprend une partie mâle d'un filetage de vis (418), conçue pour venir en prise étroitement avec une partie femelle correspondante d'un filetage de vis (416) situé sur l'intérieur de la paroi d'enceinte de la capsule, à proximité de l'ouverture pouvant être fermée de manière libérable.

8. Leurre de pêche selon la revendication 6, dans lequel le couvercle vissé comprend une partie femelle d'un filetage de vis, conçue pour venir en prise étroitement avec une partie mâle correspondante d'un filetage de vis situé sur l'extérieur de la paroi d'enceinte de la capsule, à proximité de l'ouverture pouvant être fermée de manière libérable.

9. Leurre de pêche selon la revendication 2, comprenant un moyen de fermeture non flottant conçu pour fermer étroitement l'ouverture pouvant être fermée de manière libérable de la capsule.

10. Leurre de pêche selon la revendication 9, dans lequel le dispositif d'aide à la flottabilité est séparée du moyen de fermeture et est fonctionnellement raccordé à la capsule.

11. Leurre de pêche selon l'une quelconque des revendications 1 à 8, dans lequel le dispositif d'aide à la flottabilité comprend une section queue creuse, appropriée pour recevoir un hameçon et une ligne d'hameçon.

12. Leurre de pêche selon l'une quelconque des revendications précédentes :
i) comprenant en outre un élément lumineux ; et/ou
ii) comprenant en outre un élément vibrant.

13. Leurre de pêche selon l'une quelconque des revendications précédentes, dans lequel :
i) le leurre a une forme qui ressemble à un poisson ou un insecte ; et/ou
ii) le moyen de fermeture a une forme qui ressemble à un poisson ou un insecte ; et/ou
iii) le dispositif d'aide à la flottabilité est de couleur brillante ou fluorescent.
